# EUROPEAN PATENT APPLICATION

(11) **EP 4 398 339 A1**
(43) Date of publication of application: **10.07.2024**
(21) Application number: 23793223.1
(22) Date of filing: 21.08.2023
(51) Int. Cl.: H01M 4/36, H01M 4/505, H01M 4/525, H01M 10/0525

(54) **MODIFIED TERNARY MATERIAL AND PREPARATION METHOD THEREFOR AND USE THEREOF, AND LITHIUM-ION BATTERY**

(30) Priority: 21.11.2022 CN 202211453583
(71) Applicant: Tianjin B&M Science And Technology Co., Ltd., Tianjin 300384 (CN)
(72) Inventor: YANG, Yaqiang, Tianjin 300384 (CN); MIN, Sunghwan, Tianjin 300384 (CN); ZHANG, Bin, Tianjin 300384 (CN); LI, Zuowei, Tianjin 300384 (CN); XU, Ning, Tianjin 300384 (CN)
(74) Representative: Meroni, Francesca
(86) International application number: PCT/CN2023/114076
(87) International publication number: WO 2024/109201

(57) **Abstract**

The present disclosure relates to a modified ternary material and a preparation method therefor and use thereof, and a lithium-ion battery, wherein the modified ternary material comprises a core layer and a shell layer disposed on a surface of the core layer. The core layer comprises a plurality of primary particles, the plurality of primary particles are arranged radially in radial directions, and the components of the core layer include a lithium nickel-cobalt-manganese oxide doped with a metal element M¹. The shell layer is composed of a single-crystal material, the components of the shell layer include a lithium nickel-cobalt-manganese oxide doped jointly with a metal element M¹ and a metal element M², or the components of the shell layer include a lithium nickel-cobalt-manganese oxide doped jointly with a metal element M¹, a metal element M², and a metal element M³, and the metal element M² is at least two elements selected from K, Na, Ba, Bi, Ca, Sr, Mg, Mo, B, Ce, and Sb. The modified ternary material has lower gas production, higher initial specific discharge capacity, and better cycling performance.

## Description

### Cross Reference to Related Applications

The present disclosure claims priority to Chinese Patent Application No. 202211453583.4, filed with the Chinese Patent Office on November 21, 2022, entitled "Modified Ternary Material and Preparation Method Therefor and Use Thereof, and Lithium-Ion Battery", the entirety of which is incorporated herein by reference.

### Technical Field

The present disclosure relates to the field of lithium-ion batteries, and in particular to a modified ternary material and a preparation method therefor and use thereof, and to a lithium-ion battery.

### Background Art

Lithium-ion batteries have the characteristics of high energy density, good cycling performance, no memory effect, and environmental friendliness and are widely used in the fields of electronic products, electric vehicles, astronautics and aeronautics, etc. However, traditional cathode materials for lithium-ion batteries have the problem of high impedance, which results in low initial specific discharge capacity and also affects cycling performance thereof.

Therefore, it is of great significance to provide a cathode material for a lithium-ion battery having lower impedance, higher initial specific discharge capacity, and better cycling performance.

### Summary

In view of this, the present disclosure provides a modified ternary material having lower impedance, higher initial specific discharge capacity, or better cycling performance, a preparation method therefor and use thereof, and a lithium-ion battery.

The present disclosure solves the above-mentioned technical problems by the following technical solutions.

A modified ternary material comprises a core layer and a shell layer disposed on a surface of the core layer; the core layer comprises a plurality of primary particles, the plurality of primary particles are arranged radially in radial directions, and the components of the core layer include a lithium nickel-cobalt-manganese oxide doped with a metal element M¹; the shell layer is composed of a single-crystal material, and the components of the shell layer include a lithium nickel-cobalt-manganese oxide doped jointly with a metal element M¹ and a metal element M², or the components of the shell layer include a lithium nickel-cobalt-manganese oxide doped jointly with a metal element M¹, a metal element M², and a metal element M³;
the metal element M¹ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn;
the metal element M² is at least two elements selected from K, Na, Ba, Bi, Ca, Sr, Mg, Mo, B, Ce, and Sb; and
the metal element M³ is at least one element selected from Al, Cr, Co, Er, Ga, Ge, Ho, La, Nb, Pd, Si, Se, Ru, Rh, Ta, Te, Ti, W, V, Y, Zr, and Zn.

In some embodiments, in the modified ternary material, the modified ternary material has a chemical component formula of Li₁₊ₐ[NiₓCo_{y}Mn_{z}M¹_{b}M²_{c}M³_{d}]O₂, where 0.5≤x<1, 0≤y≤0.3, 0≤z≤0.3, -0.1<a<0.2, 0<b<0.3, 0<c<0.3, 0≤d<0.2, and x+y+z+b+c+d=1.

In some embodiments, in the modified ternary material, 0.003≤b<0.3, and 0.005≤c<0.3.

In some embodiments, in the modified ternary material, the core layer has pores and has a porosity of 0.001% to 10%.

In some embodiments, in the modified ternary material, the primary particles have a width of 80 nm to 200 nm, and the primary particles have a length-to-width ratio greater than or equal to 2.

In some embodiments, in the modified ternary material, the modified ternary material further comprises a cladding layer disposed on a surface of the shell layer, the components of the cladding layer include an oxide of a metal element M⁴, and the metal element M⁴ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn.

In some embodiments, in the modified ternary material, the cladding layer has a thickness of 0.001 µm to 0.5 µm.

In some embodiments, in the modified ternary material, the modified ternary material has a specific surface area of 0.8 m²/g to 2.0 m²/g.

In some embodiments, in the modified ternary material, the modified ternary material has a PD of 2.5 g/cm³ to 3.3 g/cm³.

In some embodiments, in the modified ternary material, the modified ternary material has a D50 of 2 µm to 8 µm.

In some embodiments, in the modified ternary material, the modified ternary material has an average particle diameter of 1.2 µm to 5.2 µm.

In some embodiments, in the modified ternary material, a ratio of a difference between an outer diameter of the shell layer and an outer diameter of the core layer to the outer diameter of the shell layer is (0.01 to 0.99):1.

The present disclosure provides a method for preparing a modified ternary material, comprising steps of:
mixing a nickel-cobalt-manganese ternary material precursor, a precursor of a metal element M¹, and a lithium source and performing a first sintering treatment to obtain a ternary material intermediate; and
mixing the ternary material intermediate with a precursor of a metal element M² and performing a second sintering treatment, or mixing the ternary material intermediate with a precursor of a metal element M² and a precursor of a metal element M³ and performing a second sintering treatment;
wherein the nickel-cobalt-manganese ternary material precursor comprises a plurality of primary particles, and the plurality of primary particles are arranged radially in radial directions;
the metal element M¹ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn;
the metal element M² is at least two elements selected from K, Na, Ba, Bi, Ca, Sr, Mg, Mo, B, Ce, and Sb; and
the metal element M³ is at least one element selected from Al, Cr, Co, Er, Ga, Ge, Ho, La, Nb, Pd, Si, Se, Ru, Rh, Ta, Te, Ti, W, V, Y, Zr, and Zn.

In some embodiments, in the method for preparing a modified ternary material, the step of performing a second sintering treatment further includes a step of adding a lithium source.

In some embodiments, in the method for preparing a modified ternary material, the first sintering treatment is performed at a temperature of 600 °C to 1000 °C.

In some embodiments, in the method for preparing a modified ternary material, the second sintering treatment is performed at a temperature of 600 °C to 1000 °C.

In some embodiments, the method for preparing a modified ternary material further comprises a step of mixing a ternary material obtained by the second sintering treatment with a precursor of a metal element M⁴ and performing a third sintering treatment; and the metal element M⁴ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn.

In some embodiments, in the method for preparing a modified ternary material, the third sintering treatment is performed at a temperature of 150 °C to 750 °C.

The present disclosure provides use of the modified ternary material described above or the modified ternary material prepared by the preparation method described above in the manufacture of a lithium-ion battery.

The present disclosure provides a lithium-ion battery comprising a cathode, a separator, and a negative electrode, the cathode and the negative electrode being disposed on both sides of the separator, the cathode comprising the modified ternary material described above or the modified ternary material prepared by the preparation method described above.

The modified ternary material of the present disclosure has the following beneficial effects as compared with the prior art.

In the modified ternary material described above, the lithium nickel-cobalt-manganese oxide in the core layer is doped with a specific type of metal element M¹, which can effectively improve the stability of the radial arrangement of the plurality of primary particles in the core layer of the modified ternary material. The radial arrangement in the interior of the core layer allows uniform shrinkage and expansion during charge and discharge cycles and allows for strong resistance to microcracks. The lithium nickel-cobalt-manganese oxide in the shell layer is doped with a metal element M¹ and multiple metal elements M², or doped with a metal element M¹, multiple metal elements M², and a metal element M³, and multiple specific types of metal elements M² synergize with each other and further interact with a specific type of metal element M¹ and/or metal element M³, which can effectively facilitate the formation of a single-crystal morphology in the shell layer and further improve the stability of the radial arrangement in the interior of the core layer of the modified ternary material. The internal core layer having a radial arrangement acts in combination with the external shell layer having a single-crystal morphology, which can effectively reduce the transmission resistance and transmission distance for transmission of lithium ions from the bulk phase to the surface, thereby the modified ternary material has a lower impedance, and thus the modified ternary material has lower gas production, higher initial specific discharge capacity, and better cycling performance.

### Brief Description of Drawings

In order to more clearly illustrate specific embodiments of the present disclosure or the technical solution in the prior art, drawings required to be used in the description of the specific embodiments or the prior art will be described briefly below. It is obvious that the drawings described below are illustrative of some embodiments of the present disclosure, and it will be appreciated by those of ordinary skill in the art that other drawings can be obtained according to these drawings without any inventive effort.
FIG. 1 is a schematic structural diagram of a modified ternary material according to an embodiment.
FIG. 2 is a schematic structural diagram of a modified ternary material according to another embodiment.
FIG. 3 is a schematic structural diagram of a nickel-cobalt-manganese ternary material precursor in an embodiment.
FIG. 4 is a schematic structural diagram of a ternary material intermediate of an embodiment.
FIG. 5 is a sectional diagram of body particulates prepared in Example 1.
FIG. 6 is a scanning electron microscopy image of the body particulates prepared in Example 1.
FIG. 7 is a sectional diagram of body particulates prepared in Comparative Example 1.
FIG. 8 is a schematic sectional structural diagram of a ternary material prepared in Comparative Example 1.
FIG. 9 is a scanning electron microscopy image of body particulates prepared in Comparative Example 2.
FIG. 10 is a scanning electron microscopy image of body particulates prepared in Comparative Example 3.
FIG. 11 is a scanning electron microscopy image of body particulates prepared in Comparative Example 4.
FIG. 12 is a schematic sectional structural diagram of a ternary material prepared in each of Comparative Examples 2 to 4.
FIG 13 is a sectional scanning electron microscopy image of body particulates prepared in an example.

### Detailed Description of Embodiments

The technical solutions of the present disclosure will be described below in further detail with reference to specific examples. The present disclosure may be implemented in many different forms and is not limited to the embodiments described herein. It should be understood that these embodiments are provided for the purpose of providing a more thorough and comprehensive understanding of the content disclosed in the present disclosure.

Unless otherwise defined, all technical and scientific terms used herein have the same meanings as those commonly understood by those skilled in the art to which the present disclosure relates. The terms used in the specification of the present disclosure herein are used only for the purpose of describing specific examples and are not intended to limit the present disclosure. The terms "and/or" as used herein include any and all combinations of one or more related items listed.

In the description of the present disclosure, it should be understood that the terms "first" and "second" are used only for descriptive purposes and cannot be understood as indicating or implying relative importance or implicitly indicating the number of technical features indicated. Thus, a feature defined with "first" and "second" may explicitly or implicitly include one or more such features. In the description of the present disclosure, the term "plurality of" means two or more, unless otherwise expressly and specifically defined.

The weights of relevant ingredients mentioned in the description of examples of the present disclosure may not only refer to the specific amounts of the respective components, but also indicate the proportional relationship between the weights of the respective components, therefore any amounts of the relevant components scaled up or down in accordance with the description of the examples of the present disclosure would fall within the scope of the description of the examples of the present disclosure. Specifically, the weights described in the description of the examples of the present disclosure may be expressed in unit of mass well known in the field of chemical engineering, such as µg, mg, g, or kg.

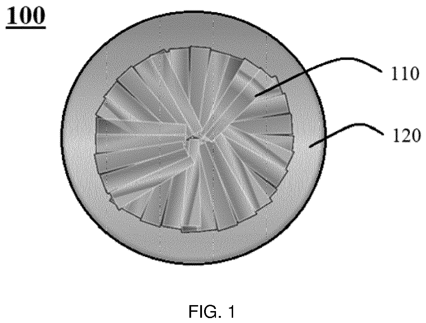

Referring to FIG. 1, an embodiment of the present disclosure provides a modified ternary material 100. The modified ternary material comprises a core layer 110 and a shell layer 120 disposed on the surface of the core layer 110. The core layer 110 comprises a plurality of primary particles, the plurality of primary particles are arranged radially in radial directions, and the components of the core layer 110 include a lithium nickel-cobalt-manganese oxide doped with a metal element M¹. The shell layer 120 is composed of a single-crystal material, and the components of the shell layer 120 include a lithium nickel-cobalt-manganese oxide doped jointly with a metal element M¹ and a metal element M², or the components of the shell layer 120 include a lithium nickel-cobalt-manganese oxide doped jointly with a metal element M¹, a metal element M², and a metal element M³.

The metal element M¹ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn.

The metal element M² is at least two elements selected from K, Na, Ba, Bi, Ca, Sr, Mg, Mo, B, Ce, and Sb.

The metal element M³ is at least one element selected from Al, Cr, Co, Er, Ga, Ge, Ho, La, Nb, Pd, Si, Se, Ru, Rh, Ta, Te, Ti, W, V, Y, Zr, and Zn.

In the modified ternary material described above, the lithium nickel-cobalt-manganese oxide in the core layer is doped with a specific type of metal element M¹, which can effectively improve the stability of the radial arrangement of the plurality of primary particles in the core layer of the modified ternary material. The radial arrangement in the interior of the core layer allows uniform shrinkage and expansion during charge and discharge cycles and allows for strong resistance to microcracks. The lithium nickel-cobalt-manganese oxide in the shell layer is doped with a metal element M¹ and multiple metal elements M², or doped with a metal element M¹, multiple metal elements M², and a metal element M³, and multiple specific types of metal elements M² synergize with each other and further interact with a specific type of metal element M¹ and/or metal element M³, which can effectively facilitate the formation of a single-crystal morphology in the shell layer and further improve the stability of the radial arrangement in the interior of the core layer of the modified ternary material. The internal core layer having a radial arrangement acts in combination with the external shell layer having a single-crystal morphology, which can effectively reduce the transmission resistance and transmission distance for transmission of lithium ions from the bulk phase to the surface, thereby the modified ternary material has a lower impedance, and thus the modified ternary material has lower gas production, higher initial specific discharge capacity, and better cycling performance.

It can be understood that the modified ternary material described above has a core-shell structure. It can be further understood that the metal element M² is at least two elements selected from K, Na, Ba, Bi, Ca, Sr, Mg, Mo, B, Ce, and Sb. Synergistic effects will occur between different metal elements M², which effectively improves the stability of the radial arrangement of the core layer of the modified ternary material and the single-crystal morphology of the shell layer. If only one metal element M² is used, no synergistic effect can be produced, and thus it is impossible to achieve the effect of improving the stability of the radial arrangement of the core layer of the modified ternary material and the single-crystal morphology of the shell layer. It can also be understood that if the interior of the core layer is not arranged radially, it is not conducive to rapid conduction of lithium ions in charge and discharge cycles, not conducive to uniform shrinkage and expansion of the material as a whole and to release of stress therefrom, and not conducive to rate and cycling performance.

In some examples, in the modified ternary material, the modified ternary material has a chemical component formula of Li₁₊ₐ[NiₓCo_{y}Mn_{z}M¹_{b}M²_{c}M³_{d}]O₂, where 0.5≤x<1, 0≤y≤0.3, 0≤z≤0.3, -0.1<a<0.2, 0<b<0.3, 0<c<0.3, 0≤d<0.2, and x+y+z+b+c+d=1.

It is understood that the chemical formula Li₁₊ₐ[NiₓCo_{y}Mn_{z}M¹_{b}M²_{c}M³_{d}]O₂ includes the components of the core layer and the shell layer; and c is a molar sum of multiple M² elements.

It is further understood that x includes, but is not limited to, 0.5, 0.55, 0.6, 0.7, 0.8, 0.9, and 0.99; y includes, but is not limited to, 0, 0.05, 0.1, 0.15, 0.2, 0.25, and 0.3; z includes, but is not limited to, 0, 0.05, 0.088, 0.1, 0.15, 0.19, 0.2, 0.25, and 0.3; a includes, but is not limited to, -0.05, 0, 0.01, 0.03, 0.06, 0.02, 0.03, 0.05, 0.06, 0.1, 0.15, and 0.19; b includes, but is not limited to, 0.003, 0.006, 0.05, 0.1, 0.15, 0.2, 0.25, and 0.29; c includes, but is not limited to, 0.005, 0.01, 0.05, 0.1, 0.15, 0.2, 0.25, and 0.29; and d includes, but is not limited to, 0, 0.002, 0.01, 0.05, 0.1, 0.15, and 0.19.

It can also be understood that the modified ternary material is a nickel-manganese binary material when y is 0; the modified ternary material is a nickel-cobalt binary material when z is 0; and the modified ternary material has a chemical component formula of Li₁₊ₐ[NiₓCo_{y}Mn_{z}M¹_{b}M²_{c}]O₂ when d is 0.

It is further understood that y and z are not zero at the same time.

In some examples, in the modified ternary material, 0<y≤0.3, and 0<z≤0.3.

In some examples, in the modified ternary material, 0.003≤b<0.3, and 0.005≤c<0.3.

In some examples, in the modified ternary material, the metal element M¹ is at least two elements selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn.

Synergistic effects can occur between different types of metal elements M¹, which can further improve the stability of the radial arrangement of the core layer of the modified ternary material.

In some examples, in the modified ternary material, the metal element M³ is W.

In some examples, in the modified ternary material, the core layer has pores and has a porosity of 0.001% to 10%.

It can be understood that the porosity of the core layer includes, but is not limited to, 0.001%, 0.01%, 0.05%, 0.1%, 0.5%, 1%, 2%, 5%, 6%, 8%, 9%, and 10%.

In some examples, in the modified ternary material, the primary particles have a width of 80 nm to 200 nm, and the primary particles have a length-to-width ratio greater than or equal to 2.

Further, the primary particles have a length-to-width ratio of 2 to 10. Optionally, the primary particles have a length-to-width ratio of 5 to 8.

It can be understood that the width of the primary particles includes, but is not limited to, 80 nm, 90 nm, 100 nm, 120 nm, 150 nm, 180 nm, and 200 nm; and the length-to-width ratio of the primary particles includes, but is not limited to, 2, 3, 4, and 5.

It is further understood that the radial arrangement of the plurality of primary particles in radial directions refers to a radial arrangement of the plurality of primary particles spreading from a common center to the circumference, and radiating outward in the length directions of the primary particles, as can be understood.

In some examples, in the modified ternary material, the modified ternary material further comprises a cladding layer disposed on a surface of the shell layer, the components of the cladding layer include an oxide of a metal element M⁴, and the metal element M⁴ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn.

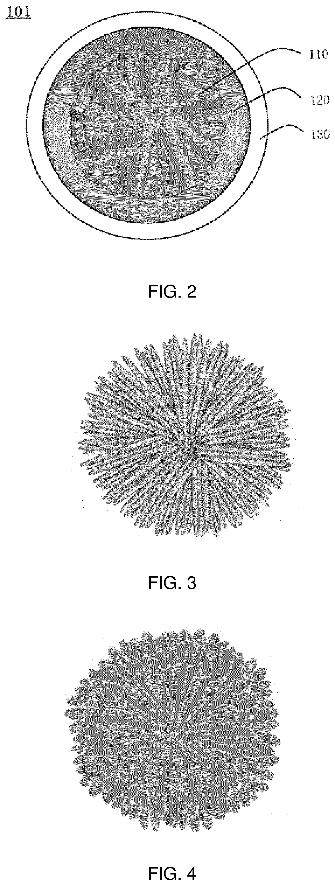

Referring to FIG. 2, in some examples, a modified ternary material 101 is provided, which comprises a core layer 110 and a shell layer 120 disposed on the surface of the core layer 110, and a cladding layer 130 disposed on the surface of the shell layer 120.

A cladding layer is disposed on the surface of the shell layer, which can further inhibit a side reaction between the modified ternary material and an electrolyte, thereby further improving the electrochemical performance of the modified ternary material.

In some examples, in the modified ternary material, the cladding layer has a thickness of 0.001 µm to 0.5 µm.

It can be understood that the thickness of the cladding layer includes, but is not limited to, 0.001 µm, 0.005 µm, 0.01 µm, 0.05 µm, 0.08 µm, 0.1 µm, 0.2 µm, 0.3 µm, 0.4 µm, and 0.5 µm.

In some examples, in the modified ternary material, the mass of the metal element M⁴ is 0.01% to 1% of the total mass of the core layer and the shell layer.

It can be understood that the percentage of the mass of the metal element M⁴ in the total mass of the core layer and the shell layer includes, but is not limited to, 0.01%, 0.05%, 0.08%, 0.1%, 0.2%, 0.5%, 0.75%, 0.9%, and 1%.

In some examples, the modified ternary material has a specific surface area of 0.8 m²/g to 2.0 m²/g.

It can be understood that the specific surface area of the modified ternary materials includes, but is not limited to, 0.8 m²/g, 0.9 m²/g, 1 m²/g, 1.2 m²/g, 1.5 m²/g, 1.8 m²/g, and 2 m²/g.

In some examples, the modified ternary material has a PD (compaction density) of 2.5 g/cm³ to 3.3 g/cm³.

It can be understood that the PD of the modified ternary material includes, but is not limited to, 2.5 g/cm³, 2.6 g/cm³, 2.7 g/cm³, 2.8 g/cm³, 2.9 g/cm³, 3.0 g/cm³, 3.1 g/cm³, and 3.3 g/cm³.

In some examples, the modified ternary material has a D50 (volumetric mean particle diameter) of 2 µm to 8 µm.

It can be understood that the D50 of the modified ternary material includes, but is not limited to, 2 µm, 3 µm, 4 µm, 5 µm, 6 µm, 7 µm, and 8 µm.

In some examples, the modified ternary material has an average particle diameter of 1.2 µm to 5.2 µm.

It can be understood that the average particle diameter of the modified ternary material includes, but is not limited to, 1.2 µm, 2 µm, 3 µm, 4 µm, 5 µm, and 5.2 µm.

In some examples, in the modified ternary material, a ratio of a difference between an outer diameter of the shell layer and an outer diameter of the core layer to the outer diameter of the shell layer is (0.01 to 0.99):1.

It can be understood that the outer diameter of the shell layer is the diameter of the modified ternary material containing the core layer and the shell layer, and the outer diameter of the core layer is the diameter of the core layer. It is further understood that the ratio of the difference between the outer diameter of the shell layer and the outer diameter of the core layer to the outer diameter of the shell layer includes, but is not limited to, 0.01:1, 0.1:1, 0.2:1, 0.3:1, 0.4:1, 0.5:1, 0.8:1, and 1:1.

An embodiment of the present disclosure provides a method for preparing a modified ternary material, comprising steps S10 to S20.

In step S10, a nickel-cobalt-manganese ternary material precursor (see FIG. 3), a precursor of a metal element M¹, and a lithium source are mixed and subjected to a first sintering treatment to obtain a ternary material intermediate (see FIG. 4); the nickel-cobalt-manganese ternary material precursor comprises a plurality of primary particles, and the plurality of primary particles are arranged radially in radial directions; and the metal element M¹ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn.

It can be understood that in the step of mixing a nickel-cobalt-manganese ternary material precursor having a plurality of primary particles arranged radially in radial directions, a precursor of a metal element M1, and a lithium source in the step S10, it is possible to mix a nickel-cobalt-manganese ternary material precursor, a precursor of a metal element M¹, and a lithium source, it is also possible to mix a nickel-cobalt-manganese ternary material precursor containing a metal element M¹ with a lithium source, or it is further possible to mix a nickel-cobalt-manganese ternary material precursor containing a metal element M¹, a precursor of the metal element M¹, and a lithium source.

During the first sintering treatment, the metal element M¹ can effectively maintain the radiality of the primary particles in the nickel-cobalt-manganese ternary material precursor, so that the obtained ternary material intermediate can maintain a radial arrangement, and the porosity of the ternary material intermediate can be maintained.

In some examples, in the step S10, the first sintering treatment is performed at a temperature of 600 °C to 1000 °C.

It can be understood that the temperature of the first sintering treatment includes, but is not limited to, 600 °C, 700 °C, 750 °C, 800 °C, 850 °C, 900 °C, and 1000 °C.

In some examples, in the step S10, the first sintering treatment is performed in an atmosphere of oxygen or air.

In some examples, the step S10 further comprises a step of crushing the obtained ternary material intermediate.

In some examples, the step S10 further comprises a step of sieving the crushed ternary material intermediate.

In step S20, the ternary material intermediate is mixed with a precursor of a metal element M² and subjected to a second sintering treatment, or the ternary material intermediate is mixed with a precursor of a metal element M² and a precursor of a metal element M³ and subjected to a second sintering treatment; the metal element M² is at least two elements selected from K, Na, Ba, Bi, Ca, Sr, Mg, Mo, B, Ce, and Sb; and the metal element M³ is at least one element selected from Al, Cr, Co, Er, Ga, Ge, Ho, La, Nb, Pd, Si, Se, Ru, Rh, Ta, Te, Ti, W, V, Y, Zr, and Zn.

The lithium nickel-cobalt-manganese oxide has been doped with the metal element M¹ after the first sintering treatment. The ternary material intermediate doped with the metal element M¹ is mixed with a precursor of a metal element M² and then subjected to a second sintering treatment, or the ternary material intermediate doped with the metal element M¹ is mixed with a precursor of a metal element M² and a precursor of a metal element M³ and then subjected to a second sintering treatment. Multiple specific types of metal element M² synergize with each other and further synergize with the metal element M¹, or with the metal element M¹ and the metal element M³, so that, at a low sintering temperature, the surface layer of the ternary material is rapidly fused to form a single crystal to obtain a shell layer, while the interior of the ternary material intermediate is still arranged radially as a core layer, which can effectively improve the stability of the radial arrangement of the core layer of the modified ternary material and the single-crystal morphology of the shell layer.

It can be understood that the shell layer is based on the ternary material intermediate doped with the metal element M¹ and further doped with a metal element M² and/or a metal element M³. In other words, the shell layer contains the metal element M¹. It can also be understood that in the step of mixing the ternary material intermediate with a precursor of a metal element M² and a precursor of a metal element M³ in the step S20, the ternary material intermediate may be mixed with a precursor of the metal element M² and a precursor of the metal element M³, or the ternary material intermediate may also be mixed with a precursor containing both the metal element M² and the metal element M³.

In some examples, in the step S20, the second sintering treatment is performed at a temperature of 600 °C to 1000 °C.

It can be understood that the temperature of the second sintering treatment includes, but is not limited to, 600 °C, 700 °C, 750 °C, 800 °C, 850 °C, 900 °C, and 1000 °C.

In some examples, in the step S20, the second sintering treatment is performed in an atmosphere of oxygen or air.

In some examples, the step S20 further comprises a step of adding a lithium source.

In some examples, the method for preparing a modified ternary material further comprises step S30 of:
mixing the ternary material obtained by the second sintering treatment with a precursor of a metal element M⁴ and performing a third sintering treatment; wherein the metal element M⁴ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn.

It can be understood that the third sintering treatment allows formation of a cladding layer of an oxide of the metal element M⁴ on the surface of the shell layer.

In some examples, in the step S30, the third sintering treatment is performed at a temperature of 150 °C to 750 °C.

It can be understood that the temperature of the third sintering treatment includes, but is not limited to, 150 °C, 200 °C, 250 °C, 300 °C, 450 °C, 500 °C, 600 °C, 700 °C, and 750 °C.

In some examples, in the step S30, the third sintering treatment is performed in an atmosphere of oxygen or air.

It can be understood that the modified ternary material described above can be prepared by the above-mentioned method for preparing a modified ternary material.

The modified ternary material prepared by the above-mentioned method for preparing a modified ternary material has a lower impedance, lower gas production, higher initial specific discharge capacity, better cycling performance, smaller specific surface area, better structural stability, better mechanical properties, higher pressed density, and better safety performance.

An embodiment of the present disclosure provides use of the modified ternary material described above in the manufacture of a lithium-ion battery.

Further, an embodiment of the present disclosure provides use of the modified ternary material described above or a modified ternary material prepared by the preparation method described above in the preparation of a cathode material for a lithium-ion battery. Another embodiment of the present disclosure provides a cathode material for a lithium-ion battery, comprising the modified ternary material described above or a modified ternary material prepared by the preparation method described above.

The modified ternary material described above or the modified ternary material prepared by the preparation method described above is used for preparing a cathode material for a lithium-ion battery and can endow the cathode material for a lithium-ion battery with a lower impedance, and higher initial specific discharge capacity and cycling performance.

In some examples, the cathode material for a lithium-ion battery may be the modified ternary material described above or the modified ternary material prepared by the preparation method described above. In other words, the cathode material for a lithium-ion battery is prepared directly from the modified ternary material described above or the modified ternary material prepared by the preparation method described above. In other examples, the cathode material for a lithium-ion battery may also comprise other materials, in addition to the modified ternary material described above or the modified ternary material prepared by the preparation method described above.

An embodiment of the present disclosure provides a lithium-ion battery, comprising a cathode, a separator, and a negative electrode, wherein the cathode and the negative electrode are disposed on both sides of the separator, and the cathode comprises the modified ternary material described above or a modified ternary material prepared by the preparation method described above.

An embodiment of the present disclosure provides use of the lithium-ion battery described above in an electronic device, a power tool, an electric vehicle, or a power storage system. Another embodiment of the present disclosure provides an electronic device, a power tool, an electric vehicle, or a power storage system comprising the lithium-ion battery described above.

### Examples

Examples will be given below with regard to the modified ternary material and the preparation method therefor and use thereof, and the lithium-ion battery according to the present disclosure. It can be understood that the modified ternary material and the preparation method therefor and use thereof, and the lithium-ion battery according to the present disclosure are not limited to the following examples.

In the examples of the present disclosure:
The particle diameter D₅₀ refers to a corresponding particle diameter when the cumulative volume distribution percentage of the cathode active material reaches 50%. Specifically, the volumetric mean particle diameter D₅₀ of the cathode active material may be measured by laser diffraction particle size analysis. For example, it may be measured with reference to standard GB/T 19077-2016 by using a laser particle size analyzer (e.g., Malver20 Master Size 3000).

The thickness of the cladding layer is measured by distinguishing the boundary between the cladding substance and body particulates by a transmission electron microscope and confirming the specific thickness of the cladding substance.

The specific surface area is tested using a SA3100 specific surface area analyzer.

The PD is tested using a pressed density meter. Specifically, 1.5 g of a cathode material sample is taken and put into a cylinder with a cylinder diameter of 12.95 mm and a cylinder height of 32.2 mm, pressurized from 0 to 3.5 T, maintained at a pressure of 3.5 T for 10 s, and then depressurized, and its volume V is measured. Its pressed density at 3.5 T is obtained as being equal to 1.5 g/V and tested 5 times to obtain an average value.

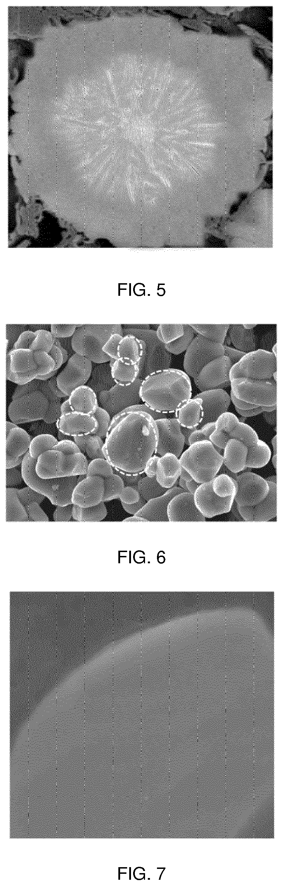

The average size of the particulates is determined by taking an SEM image by a scanning electron microscope, and measuring the diameters of all of clear and complete single modified-ternary-material particulates in the image (each particulate shown by dotted lines in FIG. 6 can correspondingly form a single modified-ternary-material particulate) to obtain an average value, which is the average size.

The area of pores is calculated by using Image-Pro Plus software or NanoMeasurer software. The pore area/total particulate area is the porosity.

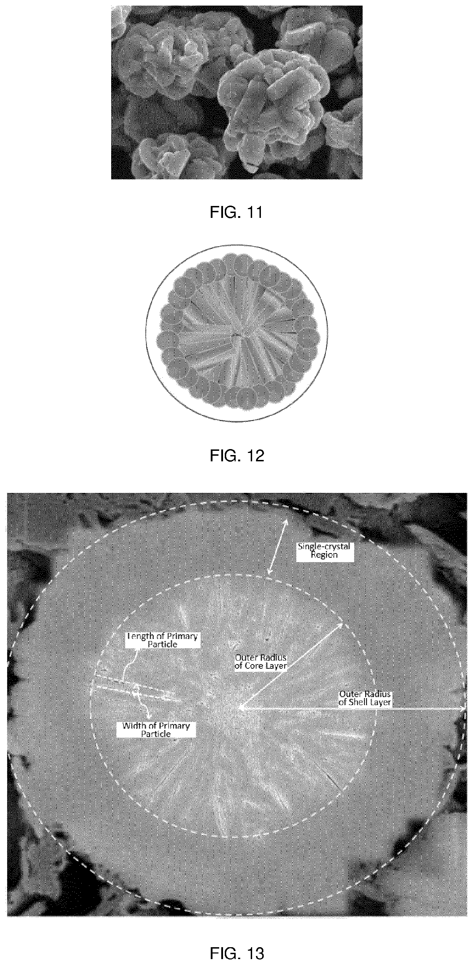

The width of the primary particles in the core layer is the average of the widths at the midpoints of the lengths of all adjacent radial pores, and the length of the primary particles is the average of the lengths of all the radial pores (see FIG.13 for the test results).

A region containing the pores is approximately in the shape of a circle, with a radius equal to the outer radius of the core layer, and the whole region of the particulate is approximately in the shape of a circle, with a radius equal to the outer radius of the shell layer (see FIG. 13 for the test results).

A region without pores in the particulate is a single-crystal region, indicating that the shell layer has a single-crystal morphology (see FIG. 13 for the test results).

### Example 1

(1) Ni_{0.7}Co_{0.1}Mn_{0.2}(OH)₂ having primary particles arranged radially in radial directions, LiOH•H₂O, and SbO₂ were mixed at a molar ratio of 1:1.05:0.003, subjected to a sintering treatment at 800 °C for 3 h in an oxygen atmosphere, crushed, and sieved to obtain a process material I.
(2) The process material I was mixed with Ba(OH)₂•8H₂O, CeO₂, and WOs at a molar ratio of 1:0.002:0.003:0.002, subjected to a sintering treatment at 890 °C for 6 h in an oxygen atmosphere, crushed, and sieved to obtain body particulates each comprising a core layer and a shell layer. The body particulates had a chemical component formula of Li_{1.05}[Ni_{0.693}Co_{0.099}Mn_{0.198}Sb_{0.003}Ba_{0.002}Ce_{0.003}W_{0.002}]O₂, with an inner core doped with elemental Sb, and a shell layer doped with elemental Sb, elemental Ba, elemental Ce, and elemental W.
(3) The body particulates were mixed with TeO₂ (the mass of elemental Te was 0.1% of the mass of the body particulates) and MoOs (the mass of elemental Mo was 0.1% of the mass of the body particulates), subjected to a sintering treatment at 650 °C in an air atmosphere, and sieved to form a modified ternary material comprising an oxide cladding layer containing elemental Te and Mo.

The modified ternary material prepared in Example 1 had a D₅₀ of 3.62 µm, a cladding layer thickness of 0.01 µm, a specific surface area of 1.0 m²/g, a PD of 3.0 g/cm³, and an average size of 2.8 µm.

A sectional view of the body particulates prepared in Example 1 was shown in FIG. 5. It can be seen from FIG. 5 that the body particulates had a core-shell structure, wherein the core layer exhibited a radial arrangement, had pores, and had a measured porosity of 0.5%, the width of primary particles in the core layer was 100 nm, and the primary particles had a length-to-width ratio of 5, while the shell layer had a single-crystal morphology, and the ratio of the difference between the outer diameter of the shell layer and the outer diameter of the core layer to the outer diameter of the shell layer was 0.48:1. A scanning electron microscopy image of the body particulates was shown in FIG. 6. It can be seen from FIG. 6 that the particulates had a round appearance and showed good sphericalness.

### Example 2

It was substantially the same as Example 1, except that step (2) was performed as follows.

(2) The process material I was mixed with Mg(OH)₂, Sr(OH)₂, and WOs, subjected to a sintering treatment at 890 °C for 6 h in an oxygen atmosphere, crushed, and sieved to obtain body particulates each comprising a core layer and a shell layer. The body particulates had a chemical component formula of Li_{1.05}[Ni_{0.693}Co_{0.099}Mn_{0.198}Sb_{0.003}Mg_{0.002}Sr_{0.003}W_{0.002}]O₂, with an inner core doped with elemental Sb, and a shell layer doped with elemental Sb, elemental Mg, elemental Sr, and elemental W.

### Example 3

(1) Ni_{0.8}Co_{0.1}Mn_{0.1}(OH)₂ having primary particles arranged radially in radial directions, LiOH•H₂O, and Ta₂O₅ were mixed at a molar ratio of 1:1.02:0.004, subjected to a sintering treatment at 750 °C for 5 h in an oxygen atmosphere, crushed, and sieved to obtain a process material I.
(2) The process material I was mixed with B₂BaO₄, subjected to a sintering treatment at 870 °C for 16 h in an oxygen atmosphere, crushed, and sieved to obtain body particulates each comprising a core layer and a shell layer. The body particulates had a chemical component formula of Li_{1.02}[Ni_{0.7888}Co_{0.0986}Mn_{0.0986}Ta_{0.008}B_{0.004}Ba_{0.002}]O₂, with an inner core doped with elemental Ta, and a shell layer doped with elemental Ta, elemental B, and elemental Ba. The body particulates had a core-shell structure, wherein the core layer exhibited a radial arrangement, had pores, and had a measured porosity of 2%, the width of primary particles in the core layer was 200 nm, and the primary particles had a length-to-width ratio of 3, while the shell layer had a single-crystal morphology, and the ratio of the difference between the outer diameter of the shell layer and the outer diameter of the core layer to the outer diameter of the shell layer was 0.2:1
(3) The body particulates were mixed with Y₂O₃ (the mass of elemental Y was 0.25% of the mass of the body particulates) and WOs (the mass of elemental W was 0.2% of the mass of the body particulates), subjected to a sintering treatment at 400 °C in an oxygen atmosphere, and sieved to form an oxide cladding layer containing elemental Y and W.

The prepared modified ternary material had a D₅₀ of 8 µm, a cladding layer thickness of 0.05 µm, a specific surface area of 1.1 m²/g, a PD of 3.1 g/cm³, and an average size of 5.2 µm.

### Example 4

It was substantially the same as Example 1, except that step (1) was performed as follows.
(1) Ni_{0.7}Co_{0.1}Mn_{0.2}(OH)₂ having a radial arrangement, LiOH•H₂O, and SbO₂ and Ta₂O₅ were mixed at a molar ratio of 1:1.05:0.003:0.0025, subjected to a sintering treatment at 800 °C for 3 h in an oxygen atmosphere, crushed, and sieved to obtain a process material I.

Body particulates obtained in step (2) had a chemical component formula of Li_{1.05}[Ni_{0.69}Co_{0.099}Mn_{0.196}Sb_{0.003}Ta_{0.005}Ba_{0.002}Ce_{0.003}W_{0.002}]O₂.

### Example 5

It was substantially the same as Example 1, except that the amounts added were adjusted so that body particulates obtained in step (2) had a chemical component formula of Li_{1.05}[Ni_{0.63}Co_{0.09}Mn_{0.18}Sb_{0.03}Ba_{0.02}Ce_{0.03}W_{0.02}]O₂.

### Example 6

It was substantially the same as Example 1, except that the amounts added were adjusted so that body particulates obtained in step (2) had a chemical component formula of Li_{1.05}[Ni_{0.592}Co_{0.085}Mn_{0.168}Sb_{0.1}Ba_{0.02}Ce_{0.03}W_{0.005}]O₂.

### Comparative Example 1

It was substantially the same as Example 1, except that SbO₂ was not added in step (1), Ba(OH)₂•8H₂O and CeO₂ were not added in step (2), and body particulates had a chemical component formula of Li_{1.05}[Ni_{0.7}Co_{0.1}Mn_{0.2}]O₂.

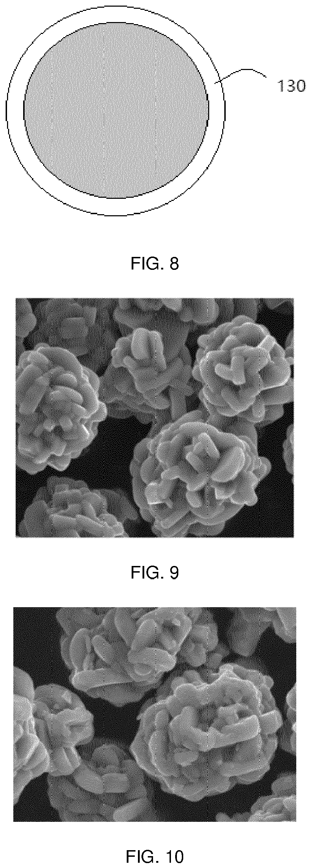

A sectional view of the body particulates prepared in Comparative Example 1 was shown in FIG. 7, and a schematic sectional structural diagram of the ternary material was shown in FIG. 8. In other words, the ternary material prepared in Comparative Example 1 had a single-crystal morphology, did not have core and shell layers, and had no inner core arranged radially in radial directions.

### Comparative Example 2

It was substantially the same as Example 1, except that Ba(OH)₂•8H₂O and CeO₂ were not added in step (2).

### Comparative Example 3

It was substantially the same as Example 2, except that Sr(OH)₂ was not added in step (2).

### Comparative Example 4

It was substantially the same as Example 2, except that Mg(OH)₂ was not added in step (2).

Scanning electron microscopy images of body particulates prepared in Comparative Example 2, Comparative Example 3, and Comparative Example 4 were shown in FIGS. 9 to 11, and schematic sectional structural diagrams of ternary materials were each shown in FIG. 12. In other words, no metal element M², or only one metal element M² was added in step (2), and the outer shell exhibited a polycrystalline morphology.

### Comparative Example 5

It was substantially the same as Example 1, except that the nickel-cobalt-manganese ternary material precursor was Ni_{0.7}Co_{0.1}Mn_{0.2}(OH)₂ having primary particles arranged disorderedly, i.e., not arranged radially in radial directions.

The doping with metal elements in the respective Examples and Comparative Examples was shown in Table 1.

**Table 1**

| Group No. | Inner Core | Shell | | | |
|---|---|---|---|---|---|
| | M¹ | M¹ | M² | | M³ |
| Example 1 | Sb | Sb | Ba | Ce | W |
| Example 2 | Sb | Sb | Mg | Sr | W |
| Example 3 | Ta | Ta | B | Ba | / |
| Example 4 | Sb, Ta | Sb, Ta | Ba | Ce | W |
| Example 5 | The amounts of doping elements were different | | | | |
| Example 6 | | | | | |
| Comparative Example 1 | No dopants | | | | |
| Comparative Example 2 | Sb | Sb | / | / | W |
| Comparative Example 3 | Sb | Sb | Mg | / | W |
| Comparative Example 4 | Sb | Sb | / | Sr | W |
| Comparative Example 5 | The nickel-cobalt-manganese ternary material precursor was different | | | | |

Button batteries were manufactured by using the modified ternary materials prepared in the Examples and Comparative Examples as cathodes. The specific manufacture method was carried out as follows. The cathode active material, acetylene black, and polyvinylidene fluoride (PVDF) were mixed at a mass ratio of 95:3:2 and coated on an aluminum foil, which was dried, cut into sheets, and dried in a vacuum drying box at 120 °C for 12 h. A Li metal sheet was used as a negative electrode. A polyethylene porous film was used as a separator. A solution of 1 mol/L of LiPF₆, ethylene carbonate (EC), and diethyl carbonate (DEC) mixed in equal quantity was used as an electrolyte. A 2025-type button battery was assembled in an argon glove box with water content and oxygen content each less than 5 ppm. The button batteries were tested at 2.8 to 4.45 V. The test results were shown in Table 2.

**Table 2**

| Items | D₅₀ (µm) | Initial DCR (Ω) | Initial Specific Discharge Capacity at 0.1C (mAh/g) | Initial Specific Discharge Capacity at 1C (mAh/g) | Capacity Retention at 50^{th} cycle at 1C/1C at 45 °C (%) |
|---|---|---|---|---|---|
| Example 1 | 3.62 | 68 | 213.3 | 197.2 | 96.4 |
| Example 2 | 3.61 | 65 | 214.3 | 198.0 | 96.5 |
| Example 3 | 3.62 | 66 | 212.8 | 197.1 | 96.1 |
| Example 4 | 3.58 | 69 | 213.2 | 197.5 | 96.9 |
| Example 5 | 3.65 | 71 | 213.1 | 197.1 | 95.8 |
| Example 6 | 3.57 | 69 | 212.3 | 196.3 | 96.2 |
| Comparative Example 1 | 3.59 | 83 | 209.5 | 193.3 | 95.0 |
| Comparative Example 2 | 3.63 | 72 | 210.8 | 194.9 | 94.3 |
| Comparative Example 3 | 3.60 | 75 | 211.0 | 193.3 | 94.8 |
| Comparative Example 4 | 3.62 | 77 | 209.9 | 195.0 | 93.9 |
| Comparative Example 5 | 3.62 | 76 | 209.8 | 193.8 | 93.4 |

It can be seen from Table 2 that the modified ternary materials prepared in the Examples exhibited lower initial DCR, higher initial specific discharge capacity, and better cycling performance, as compared with those in the Comparative Examples.

The respective technical features of the examples described above may be arbitrarily combined. Not all possible combinations of the respective technical features in the above examples are described for the sake of conciseness, however the combinations of these technical features should be considered to fall within the scope of the description in the present specification, as long as there is no contradiction therebetween.

The examples described above are merely expressive of several embodiments of the present disclosure, facilitate a specific and detailed understanding of the technical solutions of the present disclosure, but cannot be understood as limiting the scope of protection of the present patent application. It should be noted that, as appreciated by those of ordinary skill in the art, a number of variations and modifications may be made without departing from the concept of the present disclosure and shall fall within the scope of protection of the present disclosure. It should be understood that any technical solutions obtained by those skilled in the art by logical analysis, reasoning, or limited experimentation based on the technical solutions provided in the present disclosure are within the scope of protection of the claims attached to the present disclosure. Therefore, the scope of protection of the present disclosure shall be based on the content of the attached claims, and the description and drawings may be used for explaining the content of the claims.

## Claims

1. A modified ternary material, **characterized by** comprising a core layer and a shell layer disposed on a surface of the core layer, wherein the core layer comprises a plurality of primary particles, the plurality of primary particles are arranged radially in radial directions, and components of the core layer comprise a lithium nickel-cobalt-manganese oxide doped with a metal element M¹; the shell layer is composed of a single-crystal material, and components of the shell layer comprise a lithium nickel-cobalt-manganese oxide doped jointly with the metal element M¹ and a metal element M², or the components of the shell layer comprise a lithium nickel-cobalt-manganese oxide doped jointly with the metal element M¹, the metal element M², and a metal element M³;
the metal element M¹ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn;
the metal element M² is at least two elements selected from K, Na, Ba, Bi, Ca, Sr, Mg, Mo, B, Ce, and Sb; and
the metal element M³ is at least one element selected from Al, Cr, Co, Er, Ga, Ge, Ho, La, Nb, Pd, Si, Se, Ru, Rh, Ta, Te, Ti, W, V, Y, Zr, and Zn.

2. The modified ternary material according to claim 1, wherein the modified ternary material has a chemical formula of Li₁₊ₐ[NiₓCo_{y}Mn_{z}M¹_{b}M²_{c}M³_{d}]O₂, where 0.5≤x<1, 0≤y≤0.3, 0≤z≤0.3, -0.1<a<0.2, 0<b<0.3, 0<c<0.3, 0≤d<0.2, and x+y+z+b+c+d=1.

3. The modified ternary material according to claim 2, wherein 0.003≤b<0.3 and 0.005≤c<0.3.

4. The modified ternary material according to claim 1, wherein the core layer has pores.

5. The modified ternary material according to claim 4, wherein the core layer has a porosity of 0.001% to 10%.

6. The modified ternary material according to claim 1, wherein the primary particles have a width of 80 nm to 200 nm.

7. The modified ternary material according to any one of claims 1 to 6, wherein the primary particles have a length-to-width ratio greater than or equal to 2.

8. The modified ternary material according to any one of claims 1 to 6, wherein the modified ternary material further comprises a cladding layer disposed on a surface of the shell layer, components of the cladding layer comprise an oxide of a metal element M⁴, and the metal element M⁴ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn.

9. The modified ternary material according to claim 8, wherein the cladding layer has a thickness of 0.001 µm to 0.5 µm.

10. The modified ternary material according to any one of claims 1 to 6 and 9, wherein the modified ternary material comprises at least one feature of (1) to (5) as follows:
(1) the modified ternary material has a specific surface area of 0.8 m²/g to 2.0 m²/g;
(2) the modified ternary material has a PD of 2.5 g/cm³ to 3.3 g/cm³;
(3) the modified ternary material has a D50 of 2 µm to 8 µm;
(4) the modified ternary material has an average particle diameter of 1.2 µm to 5.2 µm; and
(5) a ratio of a difference between an outer diameter of the shell layer and an outer diameter of the core layer to the outer diameter of the shell layer is (0.01 to 0.99):1.

11. A method for preparing a modified ternary material, **characterized by** comprising steps of:
mixing a nickel-cobalt-manganese ternary material precursor, a precursor of a metal element M¹, and a lithium source and performing a first sintering treatment to obtain a ternary material intermediate; and
mixing the ternary material intermediate with a precursor of a metal element M² and performing a second sintering treatment, or mixing the ternary material intermediate with a precursor of a metal element M² and a precursor of a metal element M³ and performing a second sintering treatment,
wherein the nickel-cobalt-manganese ternary material precursor comprises a plurality of primary particles, and the plurality of primary particles are arranged radially in radial directions;
the metal element M¹ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn;
the metal element M² is at least two elements selected from K, Na, Ba, Bi, Ca, Sr, Mg, Mo, B, Ce, and Sb; and
the metal element M³ is at least one element selected from Al, Cr, Co, Er, Ga, Ge, Ho, La, Nb, Pd, Si, Se, Ru, Rh, Ta, Te, Ti, W, V, Y, Zr, and Zn.

12. The method for preparing a modified ternary material according to claim 11, wherein the step of performing a second sintering treatment further comprises a step of adding a lithium source.

13. The method for preparing a modified ternary material according to any one of claims 11 to 12, further comprising a step of mixing a ternary material obtained by the second sintering treatment with a precursor of a metal element M⁴ and performing a third sintering treatment, wherein the metal element M⁴ is at least one element selected from Al, B, Ba, Bi, Ca, Cr, Ce, Co, Er, Ga, Ge, Ho, K, La, Mg, Mo, Na, Nb, Pd, Si, Sb, Sr, Se, Ru, Rh, Ta, Te, Ti, W, V, Y, Zr, and Zn.

14. The method for preparing a modified ternary material according to claim 13, comprising at least one feature of (1) to (3) as follows:
(1) the first sintering treatment being performed at a temperature of 600 °C to 1000 °C;
(2) the second sintering treatment being performed at a temperature of 600 °C to 1000 °C;
(3) the third sintering treatment being performed at a temperature of 150 °C to 750 °C.

15. A lithium-ion battery, **characterized by** comprising a cathode, a separator, and a negative electrode, the cathode and the negative electrode being disposed on both sides of the separator, and the cathode comprising the modified ternary material according to any one of claims 1 to 10 or comprising the modified ternary material prepared by the method according to any one of claims 11 to 14.
